# DEMANDE DE BREVET EUROPEEN

(11) **EP 0 931 794 A1**
(43) Date de publication de la demande: **28.07.1999**
(21) Numéro de dépôt: 99400091.7
(22) Date de dépôt: 15.01.1999
(51) Int. Cl.: C08B 31/06, C09D 103/06, C09J 103/06

(54) **Nitrates d'amidon, leur procédé de préparation et leurs utilisations**

(30) Priorité: 22.01.1998 FR 9800646
(71) Demandeur: Bergerac NC, 24108 Bergerac Cedex (FR)
(72) Inventeur: Nouaillant, Michel, 24100 Bergerac (FR)
(74) Mandataire: Pech, Bernard

(57) **Abrégé**

L'invention concerne de nouveaux nitrates d'amidon qui ont une teneur en azote comprise entre 6% et 12,8%, un indice de viscosité selon la Norme européenne DIN n° 53179 supérieur à 40 et dont les solutions à 25% présentent une turbidité inférieure ou égale à 20 et une densité optique totale inférieure ou égale à 40.

L'invention concerne également le procédé de préparation de ces nitrates d'amidon. Il consiste à nitrer l'amidon au moyen d'un mélange sulfonitrique comprenant de 15 à 80% d'acide nitrique, de 50 à 75% d'acide sulfurique et de 5 à 30% d'eau, avec une masse du mélange sulfonitrique au moins dix fois supérieure à celle de l'amidon, et à une température comprise entre 0° et 40°C.

Les nouveaux nitrates d'amidon sont utiles pour former des encres, des vernis, des peintures, des laques, des adhésifs ou des enductions pour cuirs.

## Description

L'invention concerne de nouveaux nitrates d'amidon à usages industriels, leur procédé de préparation et leurs utilisations. Elle concerne en particulier des nitrates d'amidon qui, en raison de leur propriété filmogène, sont utiles notamment pour former des encres, des vernis, des peintures, des laques, des adhésifs ou des enductions pour cuirs.

Des nitrates d'amidon ont été préparés dans le passé mais ils ont été principalement utilisés comme explosifs. Bien qu'appartenant à une famille voisine de celle des nitrates de cellulose, les nitrates d'amidon étaient généralement considérés comme inutilisables pour former des vernis convenables car les films qu'ils donnaient étaient trop fragiles comme notamment indiqué dans l'ouvrage <<Chemistry and Technology of Explosives>>, vol 2 (1985), page 423 par T. Urkanski. Il est aussi mentionné page 425 de cet ouvrage que ce sont des substances non-homogènes.

Un de leurs procédés de préparation décrit pages 431 et 432 de cette même publication consiste à effectuer la nitration au moyen d'un mélange sulfonitrique. La masse d'amidon est plongée dans une masse quatre fois plus élevée du mélange sulfonitrique.

Dans le domaine des encres, vernis, peintures, laques, adhésifs et des enductions pour cuirs, on recherche de plus en plus des composés filmogènes qui peuvent former des solutions possédant une faible viscosité afin d'améliorer la productivité des machines d'application, ou qui peuvent former des solutions plus concentrées afin de diminuer la quantité des solvants à éliminer. Néanmoins les films doivent posséder les qualités telles que celles appréciées des films de nitrocellulose, comme la résistance aux agents chimiques extérieurs, les bonnes propriétés mécaniques, le bon pouvoir couvrant, la grande vitesse de séchage.

Les nitrocelluloses donnant des solutions de faible viscosité sont très difficiles à obtenir de façon économique. Ainsi le traitement thermique de la nitrocellulose qui abaisse son degré de polymérisation provoque également sa décomposition partielle et le rendement en nitrocellulose souhaitée est alors faible. De même, les rendements de nitration à partir de cellulose dépolymérisée sont mauvais. Les nitrocelluloses de plus basses viscosités qui sont commercialisées à l'heure actuelle ont un indice de viscosité déterminé selon la norme européenne DIN 53179 de 37.

Il existait par conséquent un besoin de trouver de nouveaux composés filmogènes qui présentent les propriétés et avantages souhaités dans les industries des encres, peintures, vernis, laques, adhésifs ou enductions pour cuirs.

Un objet de l'invention concerne de nouveaux nitrates d'amidon qui sont caractérisés en ce que leur teneur en azote est comprise entre 6% et 12,8% en poids ou égale à ces valeurs, leur indice de viscosité déterminé selon la norme européenne DIN n° 53179 est supérieur à 40 et en ce que leur solution, à 25% en poids dans un mélange solvant ternaire composé de 25% en poids d'alcool éthylique à 95°GL, 20% en poids d'acétate d'éthyle et 55% en poids de toluène, présente une turbidité inférieure ou égale à 20 et une densité optique totale inférieure ou égale à 40, déterminées par spectrophotométrie aux longueurs d'onde de 460 nm et 630 nm.

Ces nouveaux nitrates d'amidon, contrairement à ceux qui étaient connus qui ne possédaient pas ces qualités optiques, donnent des films possédant d'excellentes propriétés et permettent d'améliorer la productivité des procédés d'application.

Ils sont solubles dans de nombreux solvants et en particulier dans les alcools et les esters comme le sont les nitrocelluloses de mêmes teneurs en azote. Ils peuvent être imprégnés d'eau et/ou d'au moins un composé choisi parmi les alcools, les plastifiants, les diluants et les solvants.

Leur indice de viscosité est toujours supérieur à 40 et de préférence il est supérieur à 52.

Leurs propriétés optiques sont excellentes. Les nitrates d'amidon préférés selon la présente invention ont leur solution à 25% dans le mélange solvant ternaire précité qui présente une turbidité inférieure à 10 et une densité optique totale inférieure à 25.

Un autre objet de la présente invention concerne un procédé de préparation pour obtenir les nitrates d'amidon précédemment décrits.

Ce procédé est caractérisé en ce que l'on effectue la nitration de l'amidon au moyen d'un mélange sulfonitrique comprenant de 15% à 80% en poids d'acide nitrique, de 50% à 75% en poids d'acide sulfurique et de 5% à 30% en poids d'eau, en utilisant une quantité de mélange sulfonitrique telle que le rapport de la masse du mélange sulfonitrique à la masse d'amidon exprimée en matière sèche, appelé rapport de nitration, soit supérieur ou égal à 10, et à une température comprise entre 0°C et 40°C.

Grâce à ce procédé, on obtient, avec de bons rendements, des nitrates d'amidon possédant des propriétés nettement améliorées par rapport à ceux de l'art antérieur qui permettent de les utiliser comme agents filmogènes.

L'amidon utilisé comme matière de départ provient des produits habituels notamment tels que la pomme de terre, le maïs, le blé, le riz, le manioc et la banane.

En faisant varier les proportions des acides et de l'eau contenus dans le mélange sulfonitrique, dans les gammes indiquées, les nitrates d'amidon sont obtenus avec la teneur en azote souhaitée.

On détermine la masse du mélange sulfonitrique à utiliser pour que le rapport de nitration soit supérieur ou égal à 10 et plus particulièrement supérieur ou égal à 20. De préférence, on utilise une masse du mélange sulfonitrique telle que ce rapport soit supérieur à 30 et de façon encore plus préférée supérieur à 40.

La température de la réaction est quant à elle de préférence comprise entre 10°C et 35°C.

La nitration est effectuée sous agitation aussi bien en continu qu'en discontinu. Généralement, on introduit l'amidon dans le mélange sulfonitrique. Le nitrate d'amidon est obtenu sous forme solide, on le sépare du mélange sulfonitrique comme décrit dans les procédés analogues, par exemple par filtration ou centrifugation. On peut le laver ensuite une ou plusieurs fois afin d'éliminer au maximum les acides.

Pour que le nitrate d'amidon soit bien thermiquement stable, un traitement supplémentaire est nécessaire. Il est réalisé généralement en faisant cuire le nitrate dans un milieu aqueux, éventuellement sous pression, pendant plusieurs heures, selon la méthode connue pour stabiliser d'autres nitrates d'amidon, en présence ou non de substances alcalines et/ou d'autres composés, et en effectuant ou non des lavages intermédiaires.

Le nitrate d'amidon ainsi traité présente une stabilité thermique suffisante et satisfait au test de température d'auto-inflammation décrit dans l'Accord Européen relatif au transport international des marchandises dangereuses par route (ADR), publié dans le Journal Officiel de la République Française du 3 mai 1995.

Le nitrate d'amidon peut être obtenu sec, en le séparant de l'eau selon des procédés classiques tels que par filtration et centrifugation, puis en le séchant. Pour des raisons de sécurité, on préfère généralement qu'il soit imprégné d'eau et/ou d'au moins un composé choisi parmi les alcools, les plastifiants, les diluants et les solvants. Le ou les alcools peuvent être ajoutés au nitrate d'amidon sec ou bien on effectue des lavages à l'alcool du produit humide issu de la filtration ou de la centrifugation effectuée après le traitement de stabilisation. Le ou les plastifiants, solvants ou diluants sont généralement ajoutés au nitrate d'amidon sec. Les alcools, plastifiants, diluants et solvants sont ceux habituellement utilisés pour les nitrocelluloses ou les autres nitrates d'amidon. Comme exemples de ces composés, on peut citer l'alcool éthylique, l'alcool isopropylique, les «Neplast®» vendus par la Société BERGERAC NC, le toluène, la méthylisobutylcétone.

Les nitrates d'amidon selon l'invention peuvent être utilisés dans tous les domaines industriels qui réclament de bons agents filmogènes dont les solutions ont de basses viscosités. Ils sont très utiles en particulier dans l'industrie des encres, des vernis, des peintures, des laques, des adhésifs et des enductions pour cuirs. Ils donnent des films qui adhèrent bien au support et présentent une bonne souplesse. Ils peuvent notamment remplacer la nitrocellulose dont les solutions de faibles viscosités sont difficiles à obtenir par des procédés peu coûteux.

On a de plus trouvé que de façon inattendue ces nitrates d'amidon sont tout à fait compatibles avec les nitrocelluloses. On peut par conséquent les mélanger avec celles-ci, pour obtenir des solutions possédant des viscosités intermédiaires et/ou pour obtenir un meilleur compromis entre l'extrait sec d'une part et la viscosité et les propriétés mécaniques après application d'autre part.

Il est remarquable que les films obtenus à partir de mélanges de nitrates d'amidon et de nitrocelluloses aient des propriétés nettement améliorées par rapport aux films obtenus à partir de nitrocelluloses seules de mêmes indices de viscosité que les mélanges ou même d'indices de viscosité plus faibles.

Les exemples qui suivent illustrent l'invention sans toutefois la limiter.

### Exemple 1

Dans un réacteur en verre à double enveloppe de 6 litres muni d'un agitateur, on introduit, en agitant, 4000 cm³ d'un bain nitrant à 30°C, composé de 22,74% en poids d'acide nitrique, 60,51% en poids d'acide sulfurique, 15,86% en poids d'eau et 0,89% en poids d'oxydes d'azote, puis 147,8 g d'amidon natif de blé à 75% d'amylopectine, avec un taux d'humidité de 12,2% (soit 128 g exprimés en matière sèche). Le rapport de nitration est de 50.

On maintient le mélange réactionnel sous agitation, à 30°C, pendant 1h 15min, et on récupère le nitrate d'amidon obtenu par filtration.

On le lave à l'eau puis on le fait bouillir avec de l'eau, à 100°C, dans un ballon à reflux, 2 fois de suite pendant 4h puis 2 autres fois pendant 8h, en changeant l'eau après chaque traitement.

On obtient ainsi un nitrate d'amidon ayant un taux d'azote de 11%. Son indice de viscosité déterminé selon la norme européenne DIN 53179 est de 53 (viscosité de la solution dans l'acétone : 437 mPas).

### Exemple 2

Dans un réacteur identique à celui de l'exemple 1, on introduit, en agitant, 2000 cm³ d'un bain nitrant à 30°C, composé de 22,74% en poids d'acide nitrique, 58,79% en poids d'acide sulfurique, 17,73% en poids d'eau et 0,74% en poids d'oxydes d'azote, puis 73,1 g d'amidon de maïs cireux à 100% d'amylopectine, avec un taux d'humidité de 12,5% (soit 64 g exprimés en matière sèche). Le rapport de nitration est de 50.

On maintient le mélange réactionnel sous agitation, à 30°C, pendant 1h 15min, et on récupère le nitrate d'amidon obtenu par filtration.

On le lave à l'eau puis on le fait bouillir avec de l'eau, à 100°C, dans un ballon à reflux, 2 fois de suite pendant 4h puis 1 fois pendant 12h, en changeant l'eau après chaque traitement.

On mesure les propriétés optiques d'une solution à 25% de ce nitrate d'amidon dans le mélange solvant ternaire constitué de 25% en poids d'alcool éthylique à 95°GL, 20% en poids d'acétate d'éthyle et 55% en poids de toluène, avec un spectrophotomètre BECKMAN DU 50 aux longueurs d'onde de 460 nm et 630 nm. On trouve que la turbidité de la solution est de 9 et sa densité optique totale de 21.

### Exemple 3

On opère comme à l'exemple 2, mais on utilise 2550 g d'un bain nitrant comprenant 22,87% en poids d'acide nitrique, 61,51% en poids d'acide sulfurique et 14,96% en poids d'eau, et 255 g, exprimés en matière sèche, d'amidon. Le rapport de nitration est de 10.

On trouve que la turbidité de la solution du nitrate d'amidon obtenu est de 20 et sa densité optique totale de 37.

### Exemple 4

On introduit, en agitant, dans un réacteur identique à celui de l'exemple 1, 2000 cm³ d'un bain nitrant, à 30°C, composé de 24,92% en poids d'acide nitrique, 57,76% en poids d'acide sulfurique, 16,56% en poids d'eau et 0,76% en poids d'oxydes d'azote, puis 87,7 g d'amidon de maïs à 75% d'amylose, avec un taux d'humidité de 27% (soit 64 g exprimés en matière sèche). Le rapport de nitration est de 50.

On maintient le mélange réactionnel sous agitation, à 30°C, pendant 1h 15min, et on récupère le nitrate d'amidon obtenu par filtration.

On le lave à l'eau puis on le fait bouillir avec de l'eau, à 100°C, dans un ballon à reflux, sans changer l'eau.

Afin de déterminer la stabilité du nitrate d'amidon, on effectue sur des échantillons prélevés à intervalles réguliers, le test ADR de température d'auto-inflammation. L'échantillon est soumis à un échauffement brusque de 5°C/min. La déflagration doit intervenir à plus de 180°C.

Après 30h de traitement, le point de déflagration de l'échantillon soumis au test est supérieur à 180°C.

Le taux d'azote du nitrate d'amidon est de 10,85%. Il se dissout entièrement dans l'alcool éthylique. Son indice de viscosité estimé est de 53.

### Exemple 5

Dans un réacteur identique à celui de l'exemple 1, on introduit, en agitant, 2000 cm³ d'un bain nitrant à 30°C, composé de 21,52% en poids d'acide nitrique, 60,81% en poids d'acide sulfurique, 16,94% en poids d'eau et 0,73% en poids d'oxydes d'azote, puis 75 g d'amidon réticulé de pomme de terre, avec un taux d'humidité de 15% (soit 63,75 g exprimés en matière sèche). Le rapport de nitration est de 50.

On maintient le mélange réactionnel sous agitation, à 30°C, pendant 1h 30min, et on récupère le nitrate d'amidon obtenu par filtration.

On le lave à l'eau puis on le fait bouillir avec de l'eau, à 100°C, dans un ballon à reflux, 2 fois de suite pendant 4h puis 2 autres fois pendant 8h, en changeant l'eau après chaque traitement.

On récupère ensuite le nitrate d'amidon et on le sèche à l'étuve. On obtient alors 202,16 g à 57,7% d'eau (soit 85,51 g exprimés en matière sèche) de nitrate d'amidon dont le taux d'azote est de 11,40%. Le rendement est de 85%.

### Exemple 6

On prépare des solutions dans l'alcool éthylique de nitrate d'amidon seul, de nitrate d'amidon en mélange avec de la nitrocellulose, et de nitrocellulose seule. On les dépose sur une feuille de cellophane de manière à obtenir un grammage voisin de 2 g/m². Après séchage, on détermine la tenue du film sur le support, en observant l'aspect du film après froissement de l'ensemble. Plus le film s'écaille plus la tenue est mauvaise.

Les produits utilisés, leur indice de viscosité et les résultats obtenus exprimés en % de surface non écaillée sont rassemblés dans le tableau ci-dessous.

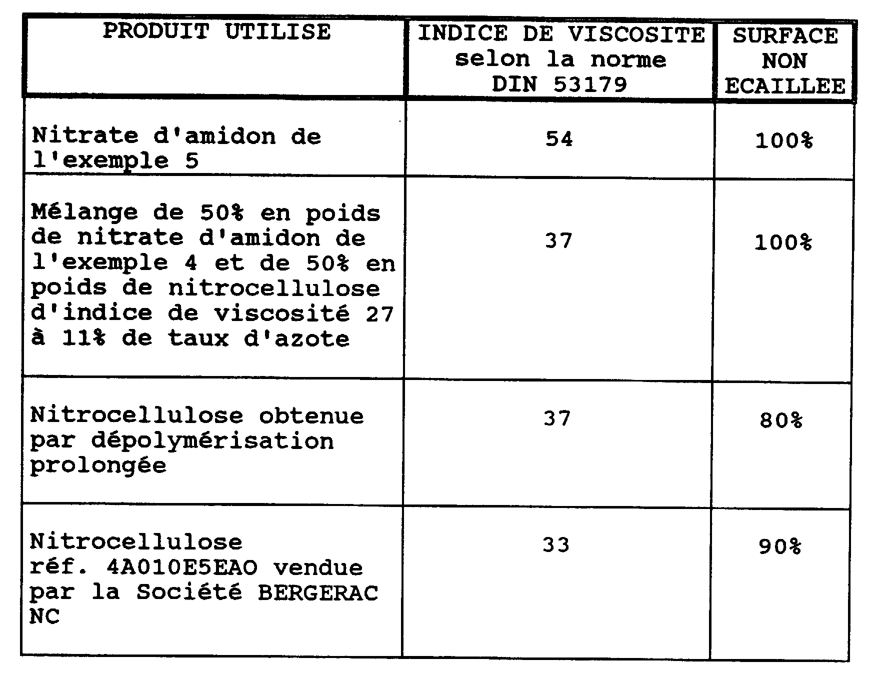

On constate que le film réalisé à partir de nitrate d'amidon seul ne présente pas de surface écaillée. Il a par conséquent une bonne adhérence et une bonne souplesse. Le film réalisé avec le mélange de nitrate d'amidon et de nitrocellulose possède ces mêmes caractéristiques qui sont meilleures que celles des films obtenus à partir de nitrocellulose seule de même indice de viscosité, et même d'indice un peu plus faible.

## Revendications

1. Nitrates d'amidon, caractérisés en ce que leur teneur en azote est comprise entre 6% et 12,8% en poids ou égale à ces valeurs, leur indice de viscosité déterminé selon la Norme européenne DIN n° 53179 est supérieur à 40 et en ce que leur solution, à 25% en poids dans un mélange solvant ternaire composé de 25% en poids d'alcool éthylique à 95°GL, 20% en poids d'acétate d'éthyle et 55% en poids de toluène, présente une turbidité inférieure ou égale à 20 et une densité optique totale inférieure ou égale à 40, déterminées par spectrophotométrie à 460 nm et 630 nm.

2. Nitrates d'amidon selon la revendication 1, caractérisés en ce que leur solution présente une turbidité inférieure à 10 et une densité optique totale inférieure à 25.

3. Nitrates d'amidon selon la revendication 1 ou 2, caractérisés en ce que leur indice de viscosité est supérieur à 52.

4. Nitrates d'amidon selon l'une quelconque des revendications 1 à 3, caractérisés en ce qu'ils sont imprégnés d'eau et/ou d'au moins un composé choisi parmi les alcools, les plastifiants, les diluants et les solvants, ou qu'ils sont dissous dans un milieu solvant.

5. Nitrates d'amidon selon l'une quelconque des revendications précédentes, caractérisés en ce qu'ils sont mélangés avec de la nitrocellulose.

6. Procédé de préparation des nitrates d'amidon selon l'une quelconque des revendications précédentes, en effectuant la nitration de l'amidon au moyen d'un mélange sulfonitrique, caractérisé en ce qu'on utilise un mélange sulfonitrique comprenant de 15% à 80% en poids d'acide nitrique, de 50% à 75% en poids d'acide sulfurique et de 5% à 30% en poids d'eau, et en quantité telle que le rapport de la masse du mélange sulfonitrique à la masse d'amidon exprimée en matière sèche, appelé rapport de nitration, soit supérieur ou égal à 10, et en ce que la température est comprise entre 0°C et 40°C.

7. Procédé de préparation selon la revendication 6, caractérisé en ce que le rapport de nitration est supérieur à 30.

8. Procédé selon la revendication 6 ou 7, caractérisé en ce que les nitrates d'amidon sont stabilisés par cuisson, éventuellement sous pression, dans un milieu aqueux, pendant plusieurs heures.

9. Utilisation des nitrates d'amidon selon l'une quelconque des revendications 1 à 5, pour former des encres, des vernis, des peintures, des laques, des adhésifs ou des enductions pour cuirs.
